# EUROPÄISCHE PATENTSCHRIFT

(11) **EP 1 078 698 B1**
(45) Veröffentlichungstag und Bekanntmachung des Hinweises auf die Patenterteilung: **17.07.2002**
(21) Anmeldenummer: 00116609.9
(22) Anmeldetag: 01.08.2000
(51) Int. Cl.: B09B 3/00, C10B 53/02, B03B 9/06, C10B 57/02, C10B 57/06, C08J 11/12, B01D 53/34, B29B 17/00, C08J 11/28

(54) **Verfahren und Vorrichtung zur thermolytischen Aufarbeitung von polymer- und zellulosehaltigen Stoffen, insbesondere Shredderleichtgut**
Method and apparatus for thermolytic treatment of polymer- and cellulose containing materials, especially light shredder residues
Procédé et dispositif pour le traitement thermolytique des matières contenant des polymères et de la cellulose, notamment des produits déchiquetés légèrs

(30) Priorität: 03.08.1999 DE 19936524
(43) Veröffentlichungstag der Anmeldung: 28.02.2001
(73) Patentinhaber: Matrmawi, Radwan, 03046 Cottbus (DE)
(72) Erfinder: Matrmawi, Radwan, 03046 Cottbus (DE)
(74) Vertreter: Hanelt, Holger

(56) Entgegenhaltungen:
- EP-A- 0 025 319
- EP-A- 0 118 310
- EP-A- 0 827 998
- US-A- 1 898 326
- US-A- 3 436 314
- US-A- 4 077 847
- US-A- 5 198 018

## Beschreibung

Die Erfindung betrifft ein Verfahren und Vorrichtung zur thermolytischen Aufarbeitung von polymer- und zellulosehaltigen Stoffen, insbesondere Shredderleichtgut und ist besonders zur Wertstoffausnutzung der polymer- und zellulosehaltigen Restefraktion der Sortierten Mischkunststoffabfälle der Altstofferfassung aus der Sammlung des Dualen Systems, im allgemeinen unter "Grüner Punkt" bekannt, geeignet.

Verpackungsmaterialien aus Industrie und Haushalt werden in ständig wachsendem Umfang erfasst und einer Wiederaufbereitung zugeführt. Soweit das vorsortierte Materialien aus einem einheitlichen Rohstoff wie Glas oder Altpapier betrifft, bereitet die Weiterverwendung in der Regel keine Schwierigkeiten. Problematisch sind jedoch die Vielstoffgemische, die Anteile von Metall, Kunststoff und Papier enthalten. Während die Eisenmetallbestandteile relativ leicht durch Magnetabscheidung selektiert werden können, bereiten die nach dem Aussondern der Schrottbestandteile übrig bleibenden Gemische aus Papier, Kunststoffen, Textilien und metallischen Resten wie z.B. Alufolie größere Schwierigkeiten. Um hier von einer reinen Deponierungslösung abzukommen wurde bereits eine größere

Anzahl von Verfahren vorgeschlagen, die versuchen das gesamte Gemisch zu zerkleinern und zu Formkörpern zu verpressen. So beschreibt die DE OS 3 501 139 ein 'Verfahren zur Herstellung von Formkörpern", indem nicht wiederverwendbare Kunststoffabfälle einem Recycling zugeführt werden. Diese Abfallmaterialien werden in bestimmten Mengenverhältnissen und unter bestimmten Bedingungen miteinander vermischt, aufgemahlen und im weiteren extrudiert. Als Bedingungen werden genannt:
- Ein Verhältnis von Thermoplaste zu Polyethylen = 15...25 : 85...75.
- Das Trocknen erfolgt unter Durchwirbeln.
- Das Material wird bei 175.."180°C im Extruder erweicht und durch eine Düse in eine Form gepresst.

Im Extruder erfolgt eventuell eine Armierung.

Diesem Verfahren sind durch die genannten hohen Polyethylenanteile enge Grenzen gesetzt.

Die DE OS 21 45 310 schlägt vor, Kunststoff- und Papierabfälle gemeinsam zu zerkleinern. Im weiteren erfolgt eine geeignete Umhüllung der gewonnenen Partikel, vorzugsweise durch Zement.

Gemäß der DE OS 23 20 989 soll Hausmüll mit Zuschlägen versetzt werden, die nach Beendigung des Schüttvorganges erstarren und in Gefäße eingeschüttet werden. Eine andere Form der Verarbeitung von Haushaltsabfällen beschreibt die DE OS 2 320 995. Hier wird der zu verarbeitende Müll durch Vermischung mit einem Kolloidbrei zu einer plastischen Masse beschrieben. Der Anteil des Kolloidbreis betrage zwischen 10 und 50 %. Der Müll wird vor der Verarbeitung durch Windsichter geleitet, ausgesonderte leichtere Teile werden zunächst einem Reißwolf aufgegeben und anschließend mit den übrigen Teilen in einen Koller durch Zerteilen oder Zerquetschen umstrukturiert. Die entstandene plastische Masse lässt man zu Formkörpern erstarren.

Hierbei geht jedoch ein großer Teil verwertbarer Stoffe verloren, da die Bildung der Formkörper lediglich der Erzielung einer dichteren Packung auf der Deponie dient.

Bei dem derzeit angewandten System der Sortierung von Abfallstoffen aus dem als "Duales System" bekannten Wiederverwertungssystem von Wertstoffen oder aus der Papierindustrie fallen Papierreststoffe, Kunststoffe, Textilien und metallische Reste wie z.B. Aluminiumfolie an. Von diesen werden durch physikalische Sortierung lediglich die Papierreststoffe wiedergewonnen.

Diese geschredderten Reststoffe gelten als Abfall und müssen entsorgt werden. Hierzu stehen derzeit als Entsorgungswege die thermische Verwertung, die Kompostierung und die Deponierung auf öffentlichen Deponien zur Verfügung.

Aufgrund des Wasseranteils und des großen Kunststoffanteils ist die Verbrennung nicht problemlos. Bei der Verbrennung stellt der große Chlorgehalt von z.B. Folien, PCB und eventuelle Dioxinbildung ein Umweltproblem dar. Außerdem sind die hohen Kosten dieser thermischen Verwertung als Nachteil zu benennen.

Kompostiert werden nur Papierreststoffe mit einem Papieranteil von ca. 80%. Der große Nachteil dieses Verfahrens ist, dass im Verhältnis zum Papier noch eine größere Menge von Boden oder Klärschlamm hinzugefügt werden muss. Daraus ergibt sich dann eine sehr geringe Menge von Papier, die kompostiert wird. Aufgrund des großen Anteils von Kunststoffen in den Spuckstoffen sind diese nicht kompostierbar, eine Verrottung findet nicht statt.

Da außerdem in vielen Fällen die Möglichkeit besteht, den verrottbaren Zelluloseanteil durch chemische Behandlung zu reduzieren, und andererseits die Kunststoffanteile in dem entstehenden Kompost eine unbeschränkte Verwendung verhindern, ist der Anwendungsbereich dieser Beseitigungstechnologie sehr stark eingeschränkt und ebenfalls unwirtschaftlich.

Die Spuckstoffe sind in den meisten Fällen für die Hausmülldeponie deklariert.

Da einerseits die Kapazität der Deponien begrenzt ist zum anderen dadurch Wertstoffe der Wirtschaft verloren gehen kann auch dieser Entsorgungsweg keine Dauerlösung sein.

Hierzu wurde bereits vorgeschlagen, die Spuckstoffe intensiv mit einem Olefingemisch, insbesondere Altöl in einem Verhältnis von Spuckstoff zu Olefingemisch von 5:1 bis 2:1, vorzugsweise 7:2 bis 5:2 zu einer homogenen Suspension zu vermischen, dieses Gemisch einer Wärmebehandlung bei Temperaturen von 200 °C bis 500 °C, vorzugsweise 250 °C bis 300 °C unterzogen und durch Abkühlung zu verfestigen.

Eine mehrsbafige Pyrolyse von Abfallstoffen ist aus dem Stand der Technik bekannt, siehe z. B. US-A-5 198 018 oder EP-A-25319.

Aufgabe der Erfindung ist es deshalb, ein einfacheres Verfahren zur Aufarbeitung von polymer- und zellulosehaltigen Stoffen, insbesondere Shredderleichtgut, die bei der Aufarbeitung insbesondere der Zellulosegewinnung aus papierhaltigen Wertstoffen anfallen, sowie Verwendungsmöglichkeiten für das nach dem Verfahren hergestellte Produkt vorzuschlagen, bei dem die in den polymer- und zellulosehaltigen Stoffen, insbesondere Shredderleichtgut enthaltenen Wertstoffe einer weiteren effektiven Verwertung zugeführt werden können.

Diese Aufgabe wird erfindungsgemäß dadurch gelöst, dass die polymer- und zellulosehaltigen Stoffen, insbesondere Shredderleichtgut mit stickstoffhaltigen Abprodukten und/oder metalloxidhaltigen Katalysatorgemischen versetzt nach den in den Ansprüchen 1 bis 6 dargestellten Verfahren vorzugsweise in einer Vorrichtung, wie sie in den Ansprüchen 7 ff. beschrieben ist zu Aktivkohle und kalziumchloridhaltigem Gips aufgearbeitet wird, wobei der Energiegehalt zum Teil zu Aufrechterhaltung des Verfahrens verwendet und zum anderen Teil als mechanische oder elektrische Energie abgeführt wird.

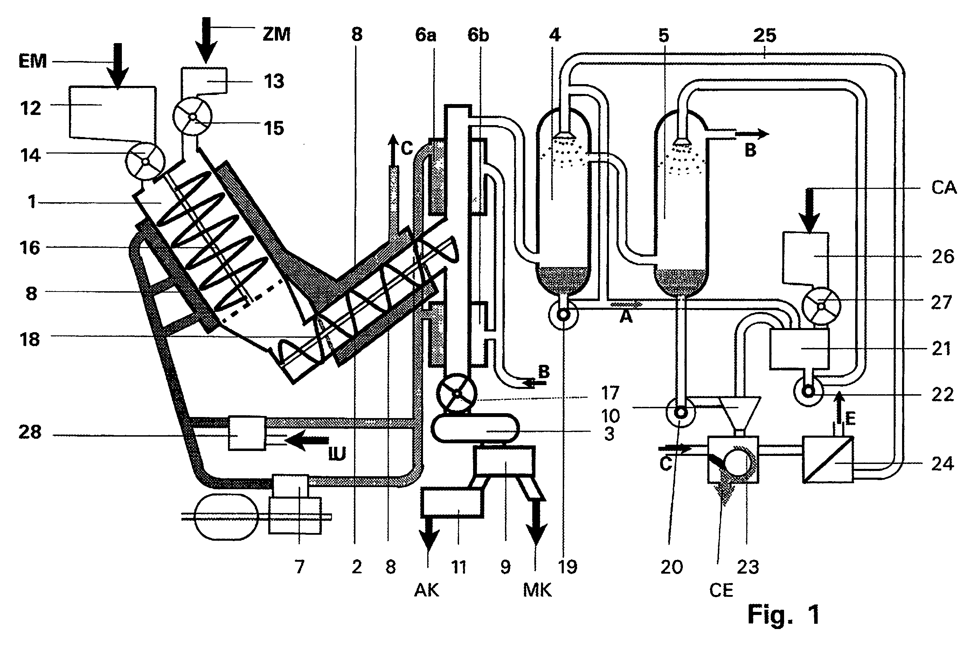

Verfahren und Vorrichtung sollen im Folgenden anhand einer in Fig. 1 dargestellten Anlage beschrieben werden.

Dabei werden die polymer- und zellulosehaltigen Stoffe, insbesondere Shredderleichtgut über eine Materialdosierung 14 die so ausgestaltet ist, dass sie gleichzeitig als Materialschleuse wirkt, einem indirekt beheizten Hauptreaktor 1 zugeführt. Über eine weitere Zuschlagstoffdosiereinrichtung 15 wird dem Hauptreaktor 1 eine stickstoffhaltige Zuschlagstoff-Katalysator-Mischung zugeführt.

Eine im Hauptreaktor 1 rotierende Mischeinrichtung insbesondere eine gleichzeitig der Beförderung des Mischgutes dienende Mischschnecke 16 führt dazu, dass die geschredderten Kunststoffabfälle und die Katalysatormischung im Hauptreaktor 1 gut durchmischt werden.

Durch Erhitzung auf eine Temperatur von 350 bis 600° C wird diese Mischung in Schwelkoks und Schwelgas zersetzt. Dabei bewirken die Metalloxide der Zuschlagstoff-Katalysator-Mischung die Beschleunigung der Zersetzung der Kunststoffe.

Die in der Zuschlagstoff-Katalysator-Mischung enthaltene Stickstoff-Komponente, kostengünstig kann hier Harnstoff verwendet werden, zerfällt durch die Hitzeeinwirkung in Ammoniak, Wasser und Kohlenstoff.

Der entstandene Schwelkoks wird in einen Nachbehandlungsreaktor 2 bei Temperaturen von 350 bis 600° C mit dem Schwelgas behandelt, weiter entgast und durch den im Schwelgas enthaltenen Wasserdampf aktiviert.

Dabei wird er durch eine gelochte Förderschnecke zu einer Materialaustragsschleuse befördert. Dabei sintern weiterhin die im Shredderleichtgut enthaltenen Metallteile, mit den Metalloxiden und Kohlenstoffanteilen zu kleinen, durch die Eisen- und Kobaltanteile magnetischen Partikeln zusammen.

Der so entstandenen Koks wird in einer Mühle 3 gemahlen. Danach können mittels Magnetabscheider 9 die metallischen Bestandteile abgetrennt werden. Der von Metallen freie Koks wird in einer Brikettierung 11 zu Aktivkohlepellets gepresst.

Das bei der Schwelung entstehende Gas wird in einer ersten Rauchgaswäsche 4 mit Wasser gewaschen. Dabei wird ein großer Teil der säurebildenden Komponenten aus der Zersetzung der im Shredderleichtgut enthaltenen Kunststoffe, insbesondere die bei der Zersetzung von PVC freiwerdende Salzsäure durch den beim Zerfall des stickstoffhaltigen Zuschlagstoffes entstandenen Ammoniaks neutralisiert und im Wasser gelöst. Die nicht neutralisierten säurebildenden Komponenten bewirken, dass das Waschwasser die ersten Rauchgaswäsche 4 stark sauer verlässt.

Dieses stark saure Waschwasser wird in einem Mischbehälter 21 dazu benutzt ein kalziumhaltigen Zuschlagstoff, vorzugsweise Brandkalk zu lösen.

Hierbei wird der kalziumhaltige Zuschlagstoff in einem Mengenverhältnis eingesetzt das die zur Neutralisation stöchiometrisch notwendige Menge um das 1,2 bis 5fache überschreitet.

Mit der so entstandenen kalziumoxidhaltigen Lösung wird das Schwelgas in einer zweiten Rauchgaswäsche 5 gewaschen. Damit werden die restlichen Säurebildner aus dem Schwelgas entfernt.

Die ausgewaschenen Chloridionen bilden mit dem Kalzium einen kristallinen Brei, der als Schlamm aus dem Sumpf der zweiten Rauchgaswäsche 5 abgepumpt und in einem Feststoffabscheider 10, vorzugsweise einem Hydrozyklon, vom Wasser getrennt wird. Das abgetrennte Wasser wird dann dem Mischbehälter 21 zugeführt.

Die aus der im Sumpf der Schwelgasnachwäsche 5 gesammelten Lösung mittels einer bekannten Fest-Flüssig-Trennanlage abgeschiedenen festen Bestandteile werden in einem Feststofftrockner 23 unter Zuhilfenahme der Abgase der Heizmäntel 8 getrocknet. Danach wird der in den Abgasen enthaltene Wasserdampf in einem Kondensator 24 wieder verflüssigt und der Schwelgasvorwäsche 4 zugeführt.

Das gereinigte Gas wird durch Wärmetauscher 6a und 6b vorgeheizt und in einem Brenner 28 und/oder einer Kraft-Wärme-Kopplungsanlage 7 zur Erhitzung des Hauptreaktors 1 und des Nachbehandlungsreaktors 2 verbrannt. Dabei dient der Brenner 28 hauptsächlich der erhöhten Wärmezufuhr in der Startphase und zur Erzeugung zusätzlicher Wärme, wenn die Abwärme der Kraft-Wärme-Kopplung des Motorgenerators 7 nicht zur Aufrechterhaltung des Prozesses ausreicht.

Die verwendete Zuschlagstoff-Katalysator-Mischung besteht aus aminhaltigen Verbindungen und Metalloxiden in einem Mischungsverhältnis zwischen 5: 1 und 1 : 1, dabei richtet sich der Anteil an aminhaltigen Verbindungen nach dem jeweiligen PVC Anteil im Shredderleichtgut.

Als metalloxidhaltige Mischung in der Zuschlagstoff-Katalysator-Mischung kann vorteilhaft der vom Magnetabscheider 9 abgeschiedene metalloxidhaltige Bestandteil des Schwelkokses verwendet werden. Durch den darin enthaltenen Kohlenstoffanteil wird in diesem Falle bewirkt, dass das bei hohen Kunststoffanteilen auftretende Verklumpen des Shredderleichtgutes im Einlaufbereich des Hauptreaktors 1 verhindert wird.

Eine Vorrichtung zur thermolytischen Aufarbeitung von polymer- und zellulosehaltigen Stoffen zur Realisierung des erfindungsgemäßen Verfahrens kann vorteilhaft wie folgt gestaltet werden.

Die Vorrichtung besteht aus einer thermischen Reaktionseinheit, einer Rauchgasaufbereitung und einer Kohleaufbereitungseinrichtung.

Die thermische Reaktionseinheit als Kernstück der Anlage ist aus dem überwiegend zylindrischen Hauptreaktor 1, und dem Nachbehandlungsreaktor 2 zusammengesetzt. Beide Reaktoren sind von einem Heizmantel 8 umschlossen. Dabei ist es unwesentlich, ob beide Reaktoren von einem gemeinschaftlichen oder jeweils von separaten Heizmänteln 8, die lediglich mit einander verbunden sind, umhüllt werden.

Im Hauptreaktor 1 und Nachbehandlungsreaktor 2 ist eine Mischeinrichtung in Form einer Mischschnecke 16 bzw. Transportschnecke 18 angeordnet. Diese werden mittels eines in Fig. 1 der Übersichtlichkeit halber nicht dargestellten bekannten Antriebes um eine mit der Achse des Hauptreaktors 1 bzw. des Nachbehandlungsreaktors 2 parallele Achse gedreht.

Damit wird erreicht, dass
■ die im jeweiligen Reaktor 1 und 2 enthaltenen Substanzen gut durchmischt werden,
■ ein intensiver Wärmeübergang von der beheizten Wandung der Reaktoren gewährleistet ist, und
■ letztlich die Reagenzien durch die Reaktoren 1, 2 befördert werden.

Hierzu eignen sich neben perforierten Förderschnecken auch im jeweiligen Reaktor 1, 2 angeordnete, um eine Welle rotierende Paddel, Schaufeln, die auch mit gelochten Zwischenböden kombiniert sein können.

Am oberen Ende des Hauptreaktors ist 1 ein Vorratsbehälter 12 und ein Zuschlagstoffbehälter 13 angeordnet, die jeweils über eine Dosiereinrichtung 14, 15 mit diesem Hauptreaktor 1 verbunden sind. Die Dosiereinrichtungen 14, 15 können als bekannte Kammerschleusen ausgeführt werden.

Eine vorteilhafte Lösung ergibt sich, wenn ein mit einer Kammer versehener, zur Außenwandung abgedichteter Kolben in einem Rohrabschnitt zwischen zwei Positionen, in denen die Kammer entweder mit dem Vorratsbehälter oder mit dem Hauptreaktor 1 verbunden ist, oszilliert wird.

Das untere Ende des Hauptreaktors 1 ist mit dem Eingang des Nachbehandlungsreaktors 2 verbunden.

Der Nachbehandlungsreaktor 2 mündet am anderen Ende in einen oberen und einen unteren Wärmetauscher 6a und 6b.

Am oberen Wärmetauscher 6 ist über eine Rohrleitung die Rauchgasaufbereitung mit dem Nachbehandlungsreaktor 2 verbunden. Diese Rauchgasaufbereitung besteht aus der Schwelgasvorwäsche 4 und einer Schwelgasnachwäsche 5.

Eine Rohrleitung verbindet den Ausgang der Schwelgasvorwäsche 4 mit dem Eingang der Schwelgasnachwäsche 5. Das in der Schwelgasnachwäsche 5 gereinigte Gas wird über eine Gasableitung vom Ausgang der Schwelgasnachwäsche 5 über die beiden am Ausgang des Nachbehandlungsreaktors 2 angeordneten Wärmetauscher 6a und 6b zur Heizung 7, 28 der Reaktoren 1, 2 geführt. Dabei wird es zuerst zur Kühlung des Schwelgases und des Kokses und anschließend zur Heizung der Reaktoren genutzt.

Die nicht im Verfahren benötigte Energie kann über eine Kraft-Wärme-Kopplung als mechanische oder elektrische Energie den Prozess entnommen werden.

Am Ausgang des unteren Wärmetauschers 6b ist die Kohleaufbereitungseinrichtung 3, 9, 11 über eine Kammerschleuse 17 angeschlossen.

Diese Kohleaufbereitungseinrichtung 3, 9, 11 besteht aus einer an die Kammerschleuse 17 angeschlossenen Mühle 3, einem mit dem Ausgang der Mühle 3 verbundenen bekannten Magnetabscheider 9 der einen Ausgang für magnetisches Material MK und einem zweiten Ausgang für unmagnetisches Material aufweist, sowie einer an diesem zweiten Ausgang für unmagnetisches Material angeschlossenen bekannten Brikettierung 11.

Der durch die Kammerschleuse 17 ausgeschleuste Koks wird mit der Mühle 3 fein vermahlen. Anschließend werden alle metallischen Bestandteile mit Hilfe des Magnetabscheiders 9 aus diesem Kohlemehl entfernt. Dabei wird der Effekt genutzt, dass die verschiedenen Metalloxide in der Hitze miteinander versintern. In dieser gesinterten Metalloxidmischung enthaltenes Eisen und ggf. aus Farbpigmenten herrührendes Kobalt gewährleisten, dass die gesinterten Metalloxidpartikel über Magnete abscheidbar sind.

Der von Metallen und deren Oxiden befreite Kohlenstaub kann staubförmig weiter verwendet werden oder mittels einer bekannten Brikettierung 11 zu Aktivkohlepellets MK verpresst werden.

Während in der Schwelgasvorwäsche 4 das Gas mit Wasser gewaschen wird, verwendet die Schwelgasnachwäsche 5 eine kalziumoxidhaltige Lauge.

Zur Herstellung dieser kalziumoxidhaltige Lauge ist ein Mischbehälter 21 mit einer Dosiereinrichtung 2, 27 so verbunden, dass das in einem Zuschlagstoffbehälter 26 vorhandene Material in einem einstellbaren Verhältnis mit einem Teil des im Sumpf der Schwelgasvorwäsche 4 gesammelten Waschwassers und der über einen Feststoffabscheider 10 separierten flüssigen Phase des im Sumpf der Schwelgasnachwäsche 5 gesammelten Schlammes gemischt werden kann.

Eine am Sumpf der Schwelgasnachwäsche 5 angeschlossene Schlammpumpe 20 fördert den im Sumpf der Schwelgasnachwäsche 5 anfallenden gips- und kalziumchloridhaltigen Schlamm in eine einem Feststoffabscheider 10. Dieser Feststoffabscheider 10 kann vorteihafterweise als Hydrozyklon ausgebildet sein.

Die dabei abgeschiedene Flüssigkeit wird dem Mischbehälter 21 zugeführt, während der Feststoffaustrag mit einem Feststofftrockner 23 verbunden ist. In diesem Feststofftrockner 23 wird dem Schlamm die restliche Feuchtigkeit entzogen, indem über eine Leitung C-C die heißen Abgase aus den Heizmänteln 8 der Reaktoren 1 und 2 geführt werden.

Über einen dem Feststofftrockner 23 nachgeschalteten Kondensator 24 wird die von den heißen Abgasen aufgenommenen Feuchtigkeit zurückgewonnen. Diese kann dann zur Ergänzung des Waschwassers in der Schwelgasvorwäsche 4 eingesetzt werden.

## Patentansprüche

1. Verfahren zur thermischen Aufarbeitung von polymer- und zellulosehaltigen Stoffen, insbesondere Shredderleichtgut **dadurch gekennzeichnet, dass**
geschredderte Kunststoffabfälle in einem indirekt beheizten Hauptreaktor (1) mit einer stickstoffhaltigen Zuschlagstoff-Katalysator-Mischung gemischt werden,
**dass** die Mischung aus geschredderten Kunststoffabfällen und Katalysatormischung in einem Hauptreaktor (1) unter Durchmischung mittels einer Mischschnecke (13) auf eine Temperatur von 350 bis 600° C erhitzt und in Schwelkoks und Schwelgas zersetzt wird,
**dass** der entstandene Schwelkoks in einen Nachbehandlungsreaktor (2) bei Temperaturen von 350 bis 600° C mit dem Schwelgas behandelt, weiter entgast, durch den im Schwelgas enthaltenen Wasserstoff aktiviert und durch eine gelochte Förderschnecke zu einer Materialaustragsschleuse befördert wird,
**dass** der entstandenen Koks in einer Mühle (3) bis zur gewünschten Feinheit gemahlen wird, wonach mittels Magnetabscheider (9) die metallischen Bestandteile abgetrennt werden und der von Metallen freie Koks in einer Brikettierung (11) zu Aktivkohlepellets gepresst wird,
dass weiterhin das bei der Schwelung entstehende Gas in einer ersten Rauchgaswäsche (4) mit Wasser und in einer zweiten Rauchgaswäsche (5) mit einer kalziumoxidhaltigen Lösung gewaschen wird,
**dass** das gereinigte Gas durch Wärmetauscher (6a und 6b) vorgeheizt und in einem Brenner (28) und/oder einer Kraft-Wärme-Kopplungsanlage(7) zur Erhitzung des Hauptreaktors (1) und des Nachbehandlungsreaktors (2) verbrannt wird.

2. Verfahren zur thermischen Aufarbeitung nach Anspruch 1, **dadurch gekennzeichnet, dass**
die kalziumoxidhaltigen Lösung aus gebranntem Kalk besteht, der unter Zuhilfenahme der in der Schwelgasvorwäsche (4) aus dem Rauchgas ausgewaschene Salzsäure im Abwasser der Schwelgasvorwäsche (4) aufgelöst wurde.

3. Verfahren zur thermischen Aufarbeitung nach Anspruch 1 oder 2, **dadurch gekennzeichnet, dass**
die Zuschlagstoff-Katalysator-Mischung aus aminhaltigen Verbindungen und Metalloxiden in einem Mischungsverhältnis zwischen 5 : 1 und 1 : 1 besteht.

4. Verfahren zur thermischen Aufarbeitung nach einen der voranstehenden Ansprüche, **dadurch gekennzeichnet, dass** in der
Zuschlagstoff-Katalysator-Mischung als metalloxidhaltige Mischung der vom Magnetabscheider (9) abgeschiedene metalloxidhaltige Bestandteil des Schwelkokses verwendet wird.

5. Verfahren zur thermischen Aufarbeitung nach einen der voranstehenden Ansprüche, **dadurch gekennzeichnet, dass**
in der Zuschlagstoff-Katalysator-Mischung als aminhaltige Verbindung Harnstoff verwendet wird.

6. Verfahren zur thermischen Aufarbeitung nach einen der voranstehenden Ansprüche, **dadurch gekennzeichnet, dass**
aus der im Sumpf der Schwelgasnachwäsche (5) gesammelten Lösung die festen Bestandteile mittels einer bekannten Fest-Flüssig-Trennanlage abgeschieden, und unter Zuhilfenahme der Abgase der Heizmäntel (8) getrocknet werden, sowie, dass der danach in den Abgasen enthaltene Wasserdampf in einem Kondensator (24) kondensiert und zum Betrieb der Schwelgasvorwäsche (4) genutzt wird.

7. Vorrichtung zur thermolytischen Aufarbeitung von polymer- und zellulosehaltigen Stoffen entsprechend dem Verfahren nach einem der voranstehenden Ansprüche, **dadurch gekennzeichnet, dass**
diese aus einer thermischen Reaktionseinheit, einer Rauchgasaufbereitung und einer Kohleaufbereitungseinrichtung (3, 9, 11) besteht,
wobei die thermische Reaktionseinheit aus dem überwiegend zylindrischen Hauptreaktor (1), und dem Nachbehandlungsreaktor (2), die von einem Heizmantel (8) umschlossen sind zusammengesetzt ist sowie dass in dem Hauptreaktor (1) und dem Nachbehandlungsreaktor (2) eine Mischeinrichtung in Form einer rotierend angeordneten Mischschnecke (16) bzw. Transportschnecke (18) so angeordnet ist, dass sie mittels eines bekannten Antriebes um eine mit der Achse des Hauptreaktors (1) bzw. des Nachbehandlungsreaktors (2) parallele Achse rotierbar ist,
**dass** am oberen Ende des Hauptreaktors (1) ein Vorratsbehälter (12) über eine Materialdosierung (14) und ein Zuschlagstoffbehälter (13) über eine Dosiereinrichtung 2 (15) mit diesem Hauptreaktor (1) verbunden sind,
dass das untere Ende des Hauptreaktors (1) mit dem Eingang des Nachbehandlungsreaktors (2) verbunden ist und
der Nachbehandlungsreaktor (2) in einen oberen Wärmetauscher (6a) und einen unteren Wärmetauscher (6b) mündet,
**dass** die Rauchgasaufbereitung aus einer bekannten Schwelgasvorwäsche (4) und einer Schwelgasnachwäsche (5) besteht wobei die Gaszuführung der Schwelgasvorwäsche (4) über den oberen Wärmetauscher (6a) mit dem Nachbehandlungsreaktor (2) verbunden ist und eine weitere Leitung den Ausgang der Schwelgasvorwäsche (4) mit dem Eingang der Schwelgasnachwäsche (5) verbindet, sowie, dass eine Gasableitung vom Ausgang der Schwelgasnachwäsche (5) über die beiden am Ausgang des Nachbehandlungsreaktors (2) angeordneten Wärmetauscher (6a und 6b) zur Heizung (7, 28) der Reaktoren (1, 2) geführt ist, sowie
**dass** am Ausgang des unteren Wärmetauschers (6b) eine Kohleaufbereitungseinrichtung (3, 9, 11) über eine Kammerschleuse (17) angeschlossen ist.

8. Vorrichtung nach Anspruch 7, **dadurch gekennzeichnet, dass** die Kohleaufbereitungseinrichtung (3, 9, 11), aus einer an die Kammerschleuse (17) angeschlossene Mühle (3), einem mit dem Ausgang der Mühle (3) verbundenen bekannten Magnetabscheider (9) der einen Ausgang für magnetisches Material (MK) und einem zweiten Ausgang für unmagnetisches Material aufweist, sowie einer an diesem zweiten Ausgang für unmagnetisches Material angeschlossenen bekannten Brikettierung (11) besteht.

9. Vorrichtung nach Anspruch 7 und/oder 8, **dadurch gekennzeichnet, dass** die Mischbehälter (21 )und Dosiereinrichtung 2 (27) so verbunden sind, **dass** das in einem Zuschlagstoffbehälter (26) vorhandene Material in einem einstellbaren Verhältnis mit einem Teil des im Sumpf der Schwelgasvorwäsche (4) gesammelten Waschwassers sowie der über einen Feststoffabscheider (10) separierten flüssigen Phase des im Sumpf der Schwelgasnachwäsche (5) gesammelten Schlammes gemischt werden kann,
**dass** weiterhin der Mischbehälter (21) über eine Laugenpumpe (22) und eine daran angeschlossene Leitung mit dem Sprühkopf der Schwelgasnachwäsche (5) verbunden ist.

10. Vorrichtung nach einem oder mehreren der Anspruch 7 bis 9, **dadurch gekennzeichnet, dass**
am Sumpf der Schwelgasnachwäsche (5) eine Schlammpumpe (20) angeschlossen ist, deren Ausgang mit einem Feststoffabscheider (10) verbunden ist, wobei der Flüssigkeitsausgang mit dem Mischbehälter (21) verbunden ist und der Feststoffaustrag mit einem Feststofftrockner (23) verbunden ist, durch den über eine Leitung (C-C) die heißen Abgase aus den Reaktoren (1 und 2) geführt werden, **dass** weiterhin ein Kondensator (24) vorhanden ist, der mit dem Abluftanschluss des Feststofftrockners (23) verbunden ist und von dem ausgehend eine Kondensatleitung zum Sprühkopf der Schwelgasvorwäsche (4) geführt ist.

11. Vorrichtung nach Anspruch 10, **dadurch gekennzeichnet, dass** der Feststoffabscheider (10) als Hydrozyklon ausgebildet ist.

## Claims

1. Method for thermolytic treatment of polymer- and cellulose containing materials, especially light shredder residues **characterized in that** the shredded plastics waste is mixed with a nitrogen-containing additive-catalyst mixture in an indirectly heated main reactor (1),
that the mixture consisting of shredded plastics waste and catalyst mixture is heated to a temperature of 350 to 600° C in a main reactor (1) while mixing it thoroughly by mixing screw (13) and decomposed into low temperature carbonization coke and low temperature carbonization gas,
**that** the formed low temperature carbonization coke is treated with the low temperature carbonization gas in an after-treatment reactor (2) at temperatures of 350 to 600° C, further degassed, activated by the hydrogen contained in the low temperature carbonization gas and conveyed by a perforated feed screw to a material discharge sluice,
**that** the formed coke is reduced to powder up to the desired fineness in a mill (3), afterwards the metallic constituents are separated by a magnetic separator (9) and the coke free from metals is pressed to activated carbon pellets in a briquetting plant (11),
**that** furthermore the gas formed during low temperature carbonization is washed in a first flue-gas washing (4) with water and in a second flue-gas washing (5) with a solution containing calcium oxide,
that the purified gas is pre-heated by heat exchangers (6a and 6b) and combusted in a burner (28) and/or a combined heat and power plant (7) for heating the main reactor (1) and the after-treatment reactor (2).

2. Method for thermolytic treatment according to claim 1, **characterized in that** the solution containing calcium oxide consists of caustic lime dissolved in waste water of low temperature carbonization gas preliminary washing (4) with the aid of hydrochloric acid washed out from flue-gas in low temperature carbonization gas preliminary washing (4).

3. Method for thermolytic treatment according to claim 1 or 2, **characterized in that** the additive-catalyst mixture consists of amine-containing compounds and metallic oxides in a mixing ratio between 5 : 1 and 1 : 1.

4. Method for thermolytic treatment according to one of the preceding claims, **characterized in that**
the metallic oxide-containing constituent of the low temperature carbonization coke separated by magnetic separator (9) is used as metal-oxide-containing mixture in the additive-catalyst mixture.

5. Method for thermolytic treatment according to one of the preceding claims **characterized in that**
urea is used as amine-containing compound in the additive-catalyst mixture.

6. Method for thermolytic treatment according to one of the preceding claims **characterized in that**
the solid constituents of the solution collected in the bottom of low temperature carbonization gas rewashing system (5) are separated by a known solid-liquid separating plant and dried with the aid of waste gases of heating jackets (8) as well as that the water vapor contained in waste gases condenses in a condenser (24) and is used for the operation of low temperature carbonization gas preliminary washing (4).

7. Apparatus for thermolytic treatment of polymer- and cellulose containing materials, especially light shredder residues based on the procedure according to one of the preceding claims **characterized in that**
it consists of a thermal reaction unit, a flue-gas treatment system and a coal preparation plant (3, 9, 11),
where the thermal reaction unit consists of the mainly cylindrical main reactor (1) and after-treatment reactor (2) enclosed by a heating jacket (8) so that in main reactor (1) and in after-treatment reactor (2) a mixing unit has been arranged in form of a rotating mixing screw (16) or a screw conveyor (18) in such a way that it can be rotated around an axle parallel to the axle of main reactor (1) or after-treatment reactor (2) by a known drive,
**that** at the upper end of main reactor (1) a storage container (12) is connected with this main reactor (1) by material dosing (14) and an additive container (13) is connected with this main reactor (1) by a dosing device 2 (15),
**that** the lower end of main reactor (1) is connected to the inlet of after-treatment reactor (2) and
after-treatment reactor (2) opens into upper heat exchanger (6a) and lower heat exchanger (6b),
that the flue-gas treatment consists of known low temperature carbonization gas preliminary washing (4) and low temperature carbonization gas rewashing system (5), where the gas supply of low temperature carbonization gas preliminary washing (4) is connected to after-treatment reactor (2) by upper heat exchanger (6a) and a further line connects the outlet of low temperature carbonization gas preliminary washing (4) with the inlet of low temperature carbonization gas rewashing system (5) as well as that a gas discharge is led from the outlet of low temperature carbonization gas rewashing system (5) via two heat exchangers (6a and 6b) arranged at the outlet of after-treatment reactor (2) to heating (7, 28) of reactors (1, 2) as well as
**that** a coal preparation plant (3, 9, 11) is connected at the outlet of lower heat exchanger (6b) via a chamber sluice (17).

8. Apparatus according to Claim 7, **characterized in that**
coal preparation plant (3, 9, 11) consists of a mill (3) connected to chamber sluice (17), a known magnetic separator (9) connected with the outlet of mill (3), the magnetic separator having an outlet for magnetic material (MK) and a second outlet for nonmagnetic material as well as a known briquetting plant (11) connected to this second outlet for nonmagnetic material.

9. Apparatus according to Claim 7 and/or 8, **characterized in that**
mixing containers (21) and dosing device 2 (27) are connected in such a way that the material in additive container (26) can be mixed in an adjustable proportion with part of the wash water collected in the bottom of low temperature carbonization gas preliminary washing (4) as well as the liquid phase separated by a solid material separator (10) of the sludge collected in the bottom of low temperature carbonization gas rewashing system (5),
**that** furthermore mixing container (21) is connected with the spraying head of low temperature carbonization gas rewashing system (5) by an alkali pump (22) and a line connected to it.

10. Apparatus according to one or several of claims 7 to 9 **characterized in that** sludge pump (20) is connected at the bottom of low temperature carbonization gas rewashing system (5), the outlet of the pump being connected to solid matter separator (10), whereby the liquid outlet is connected to mixing container (21) and the solid matter discharge is connected to solid matter drier (23) through which the hot waste gases are removed from reactors (1 and 2) through piping (C-C),
**that** furthermore a condenser (24) connected to the outgoing air connection of solid matter drier (23) and a condensate line is led from the spraying head of low temperature carbonization gas preliminary washing (4) starting from the condensate line.

11. Apparatus according to claim 10 **characterized in that** this solid matter separator (10) is designed as a hydrocyclone.

## Revendications

1. Procédé de traitement thermique des substances contenant des polymères et de la cellulose, en particulier les produits de concassage des plastiques, **caractérisé en** ceci
**que** les déchets de plastique concassés sont joints à un mélange d'additifs et de catalyseurs azoté dans un réacteur principal à chauffage indirect (1),
**que** le mélange de déchets plastiques concassés et le mélange de catalyseur est mélangé dans un réacteur principal (1) par malaxage avec une vis de mélange 13), chauffé à une température de 350 à 600 °C et dégradé dans le coke basse température et le gaz de distillation à basse température,
**que** le coke basse température ainsi obtenu est traité au gaz de distillation à basse température dans un réacteur secondaire (2) à une température de 350 à 600 °C, soumis à un nouveau dégazage, activé par l'hydrogène du gaz de distillation à basse température et injecté dans une décharge de matériau au moyen d'une vis de convoyage perforée,
**que** le coke ainsi obtenu est broyé dans un broyeur (3) à la granulométrie souhaitée, après quoi les parties métalliques sont prélevées par un séparateur magnétique (9) et le coke sans métaux est pressé dans une installation d'agglomération (11) pour donner des pastilles de charbon actif,
que, en plus, le gaz obtenu par distillation lente est lavé à l'eau dans un laveur de gaz de fumée (4) et avec une solution à base d'oxyde de calcium dans un second laveur de gaz de fumée (5),
**que** le gaz purifié est chauffé par échangeur de chaleur (6a et 6b) et brûlé sur un brûleur (28) et/ou une installation combinée chaleur-force (7) pour le chauffage du réacteur principal (1) et du réacteur secondaire (2).

2. Procédé de traitement thermique selon la revendication 1 **caractérisé en** ceci
que la solution à base d'oxyde de calcium est faite de chaux vive (4), dissoute dans les eaux résiduaires du lavage du gaz de distillation à basse température (4) avec adjonction de l'acide chlorhydrique provenant du lavage du gaz de distillation à basse température (4).

3. Procédé de traitement thermique selon la revendication 1 ou 2 **caractérisé en** ceci
que le mélange additif-catalyseur est fait de composés aminés et d'oxydes métalliques dans une proportion entre 5 : 1 et 1 : 1.

4. Procédé de traitement thermique selon l'une des revendications précédentes **caractérisé en** ceci
que le mélange additif-catalyseur est fait d'un mélange à base d'oxydes métalliques des composants du coke de distillation à basse température obtenus par le séparateur magnétique (9).

5. Procédé de traitement thermique selon l'une des revendications précédentes **caractérisé en** ceci
que l'agent de liage du mélange additif-catalyseur est l'urée.

6. Procédé de traitement thermique selon l'une des revendications précédentes **caractérisé en** ceci
que les composants solides de la solution récupérée dans le schlamm du laveur de gaz de distillation à basse température (5) sont séparés par un séparateur solide-liquide connu et sont séchés par adjonction des gaz d'échappement des enveloppes de chauffage (8), et que la vapeur d'eau contenue dans les gaz d'échappement est ensuite condensée dans un condenseur (24) et utilisée pour le premier lavage du gaz de distillation à basse température (4).

7. Dispositif de traitement thermolytique des substances contenant des polymères et de la cellulose selon le procédé d'après l'une des revendications précédentes, **caractérisé en** ceci
**qu**'il est composé d'une unité de réaction thermique, d'un traitement du gaz de fumée et d'un dispositif de traitement du charbon (3, 9, 11), l'unité de réaction thermique est composée principalement d'un réacteur cylindrique principal (1) et du réacteur de retraitement (2), recouverts d'une enveloppe de chauffage (8),
**que** le dispositif de mélange est composé d'une vis de mélange rotative (16) et d'une vis de transport (18) dans le réacteur principal (1) et le réacteur secondaire (2), installées de telle manière qu'elles exécutent une rotation dans un axe parallèle à l'axe du réacteur principal (1) et du réacteur secondaire (2) au moyen d'un entraînement connu,
qu'à l'autre extrémité du réacteur principal (1), un réservoir (12) est raccordé au réacteur principal (1) par un dosage de matière (14) et un réservoir d'additifs (13) au moyen d'une installation de doseur 2 (15),
que l'extrémité inférieure du réacteur principal (1) est raccordée à l'entrée du réacteur de retraitement (2) et aboutit au réacteur de retraitement (2) par un échangeur de chaleur supérieur (6a) et un échangeur de chaleur inférieur (6b),
**que** le traitement du gaz de fumée est composé d'un laveur préliminaire connu (4) et d'un laveur secondaire de gaz de distillation à basse température (5), l'alimentation en gaz du laveur préliminaire de gaz de distillation à basse température (4) sur l'échangeur de chaleur supérieur (6a) étant raccordé au réacteur secondaire (2), tandis qu'une autre conduite raccorde la sortie du laveur préliminaire de gaz de distillation à basse température (4) à l'entrée du laveur secondaire de gaz de distillation à basse température (5) et qu'une conduite de décharge sur la sortie du laveur secondaire de gaz de distillation à basse température (5) mène aux deux échangeurs de chaleur (6a et 6b) en aval du réacteur de retraitement (2) pour le chauffage (7, 28) des réacteurs (1, 2), et
qu'un dispositif de traitement du charbon (3, 9, 11) est raccordé à la sortie de l'échangeur de chaleur inférieur (6b) par une chambre de décharge (17).

8. Dispositif selon, la revendication 7, **caractérisé en** ceci que le dispositif de préparation du charbon (3, 9, 11) comporte un broyeur (3) raccordé à la chambre de décharge (17), un séparateur magnétique connu (9) raccordé à la sortie du broyeur (3) présentant une sortie pour le matériau magnétique (MK) et une seconde sortie pour le matériau non magnétique et une installation d'agglomération connue (11) raccordée à cette seconde sortie pour le matériau non magnétique.

9. Dispositif selon la revendication 7 et/ou 8, **caractérisé en** ceci que la cuve de mélange (21) et l'installation de dosage 2 (27) sont raccordées de telle manière que le matériau se trouvant dans un réservoir d'additif (26) peut être mélangé dans des proportions ajustables avec une partie de l'eau de lavage collectée sur le schlamm du lavage préliminaire du gaz de distillation à basse température (4) et avec la phase liquide du schlamm collecté sur le schlamm du lavage secondaire du gaz de distillation à basse température (5) obtenue par un séparateur de solides (10), qu'en plus le réservoir mélangeur (21) est raccordé à la tête de pulvérisation du lavage secondaire du gaz de distillation à basse température (5) au moyen d'une pompe de lessive (22) et d'une conduite raccordée à celle-ci.

10. Dispositif selon l'une ou plusieurs des revendications 7 à 9 **caractérisé en** ceci
**qu**'une pompe de schlamm (20) est raccordée au schlamm du lavage secondaire du gaz de distillation à basse température (5) dont la sortie est raccordée à un séparateur de solides (10), la sortie de liquides étant raccordée au réservoir mélangeur (21) et la sortie solide à un sécheur de solides (23) par laquelle les gaz d'échappement chauds des réacteurs (1 et 2) sont dirigés sur une conduite (C-C),
**que**, de plus, un condenseur (24) est installé qui est relié au raccord d'air d'échappement du sécheur de solides (23) et qui comporte une sortie de dérivation du condensat vers la tête de pulvérisation du laveur préliminaire de gaz de distillation à basse température (4).

11. Dispositif selon la revendication 10 **caractérisé en** ceci que le séparateur de solides (10) est un hydro-cyclône.
